# EUROPEAN PATENT APPLICATION

(11) **EP 4 734 030 A1**
(43) Date of publication of application: **29.04.2026**
(21) Application number: 25211734.6
(22) Date of filing: 28.10.2025
(51) Int. Cl.: G06Q 20/32, H04B 5/70, H04W 4/50, H04W 4/80

(54) **OFFLINE SMART WEARABLE DEVICE NFC SERVICE PROCESSING METHOD, DEVICE, AND EQUIPMENT**

(30) Priority: 28.10.2024 CN 202411514802
(71) Applicant: Alipay (Hangzhou) Digital Service Technology Co., Ltd., Hangzhou, Zhejiang 310000 (CN)
(72) Inventor: RUAN, Xuecong, Hangzhou, Zhejiang, 310000 (CN)
(74) Representative: Fish & Richardson P.C.

(57) **Abstract**

One or more embodiments of this specification disclose an NFC service processing solution for an offline smart wearable device, including: controlling an NFC card reader on the offline smart wearable device to be in an off state; receiving an NFC service trigger instruction; entering a specified service application, and automatically switching the NFC card reader from the off state to an on state through the specified service application; reading target information from a target NFC device through the NFC card reader in the on state, and writing back user information of the offline smart wearable device to the target NFC device, so that the target NFC device interacts with a server of the specified service application based on the user information, and executes a corresponding target service; and establishing a short-range wireless communication connection with the target NFC device based on the target information, and receiving an execution result that is of the target service and that is returned by the target NFC device, where a maximum communication distance corresponding to the short-range wireless communication connection is greater than an NFC communication distance of the target NFC device.

## Description

### TECHNICAL FIELD

This specification relates to the field of near field communication technologies, and in particular, to NFC service processing methods, apparatuses, and devices for offline smart wearable devices.

### BACKGROUND

With the development of Internet technologies and the popularization of smartphones, increasingly more services can be conducted through corresponding applications on the smartphones, bringing very great convenience to people's lives.

Currently, two-dimensional code is widely applied and popularized in service fields such as payment. However, in actual applications, for some users or in some scenarios, relatively cumbersome operations are also needed for payment based on the two-dimensional code. With the increase in mobile devices with near field communication (NFC) functions, especially smartphones, many smartphones support NFC payment methods. Specifically, the smartphone remains in a card simulation mode and simulates the smartphone as an NFC card for an NFC device for payment to read, or the smartphone remains in a card reader mode and monitors whether there is an NFC device or an NFC card for payment nearby. During this process, the smartphone needs to interact with a server online to complete a service.

Not only are the smartphones becoming increasingly popular, but there is also a growing number of offline smart wearable devices, primarily smartwatches. To enable the smartwatches to support payment, some payment service providers bring payment solutions from the smartphones directly to the smartwatches for use.

However, compared with the smartphone, the smartwatch is often in an offline state and has different limitations in terms of energy consumption, screen size, etc. Based on this, a payment solution that is more suitable for an offline smartwatch is needed.

### SUMMARY

One or more embodiments of this specification provide NFC service processing methods, apparatuses, and devices for offline smart wearable devices, to resolve the following technical problem: A payment solution more suitable for an offline smartwatch is needed.

To resolve the above-mentioned technical problem, one or more embodiments of this specification are implemented as follows:

One or more embodiments of this specification provide an NFC service processing method for an offline smart wearable device, applied to the offline smart wearable device, where the method includes: controlling an NFC card reader on the offline smart wearable device to be in an off state; receiving, in the off state, an NFC service trigger instruction for the offline smart wearable device; entering a specified service application on the offline smart wearable device in response to the NFC service trigger instruction, and automatically switching the NFC card reader from the off state to an on state through the specified service application; after the offline smart wearable device is close to a target NFC device, reading target information from the target NFC device through the NFC card reader in the on state, and writing back user information of the offline smart wearable device to the target NFC device, so that the target NFC device interacts with a server of the specified service application based on the user information, and executes a corresponding target service; and establishing a short-range wireless communication connection with the target NFC device based on the target information, and receiving, through the short-range wireless communication connection, an execution result that is of the target service and that is returned by the target NFC device, so that the specified service application obtains the execution result, where a maximum communication distance corresponding to the short-range wireless communication connection is greater than an NFC communication distance of the target NFC device.

One or more embodiments of this specification provide another NFC service processing method for an offline smart wearable device, applied to a target NFC device, where the method includes: after the offline smart wearable device is close to the target NFC device, to read target information from the target NFC device through an NFC card reader in an on state on the offline smart wearable device, receiving user information that is of the offline smart wearable device and that is written back by the offline smart wearable device, where the offline smart wearable device enters a specified service application on the offline smart wearable device in response to an NFC service trigger instruction, and automatically switches the NFC card reader from an off state to the on state through the specified service application; interacting with a server of the specified service application based on the user information, and executing a corresponding target service; and establishing a short-range wireless communication connection with the offline smart wearable device based on the target information, and returning an execution result of the target service to the offline smart wearable device through the short-range wireless communication connection, so that the specified service application obtains the execution result, where a maximum communication distance corresponding to the short-range wireless communication connection is greater than an NFC communication distance of the target NFC device.

One or more embodiments of this specification provide an NFC service processing apparatus for an offline smart wearable device, used in the offline smart wearable device, where the apparatus includes: a control module, configured to control an NFC card reader on the offline smart wearable device to be in an off state; a receiving module, configured to receive, in the off state, an NFC service trigger instruction for the offline smart wearable device; a switching module, configured to enter a specified service application on the offline smart wearable device in response to the NFC service trigger instruction, and automatically switch the NFC card reader from the off state to an on state through the specified service application; a reading module, configured to: after the offline smart wearable device is close to a target NFC device, read target information from the target NFC device through the NFC card reader in the on state, and write back user information of the offline smart wearable device to the target NFC device, so that the target NFC device interacts with a server of the specified service application based on the user information, and executes a corresponding target service; and a connecting module, configured to: establish a short-range wireless communication connection with the target NFC device based on the target information, and receive, through the short-range wireless communication connection, an execution result that is of the target service and that is returned by the target NFC device, so that the specified service application obtains the execution result, where a maximum communication distance corresponding to the short-range wireless communication connection is greater than an NFC communication distance of the target NFC device.

One or more embodiments of this specification provide another NFC service processing apparatus for an offline smart wearable device, used in a target NFC device, where the apparatus includes: a receiving module, configured to: after the offline smart wearable device is close to the target NFC device, to read target information from the target NFC device through an NFC card reader in an on state on the offline smart wearable device, receive user information that is of the offline smart wearable device and that is written back by the offline smart wearable device, where the offline smart wearable device enters a specified service application on the offline smart wearable device in response to an NFC service trigger instruction, and automatically switches the NFC card reader from an off state to the on state through the specified service application; an execution module, configured to: interact with a server of the specified service application based on the user information, and execute a corresponding target service; and a connecting module, configured to: establish a short-range wireless communication connection with the offline smart wearable device based on the target information, and return an execution result of the target service to the offline smart wearable device through the short-range wireless communication connection, so that the specified service application obtains the execution result, where a maximum communication distance corresponding to the short-range wireless communication connection is greater than an NFC communication distance of the target NFC device.

One or more embodiments of this specification provide an NFC service processing device for an offline smart wearable device, used in the offline smart wearable device, where the device includes: at least one processor; and a memory communicatively connected to the at least one processor, where the memory stores instructions that can be executed by the at least one processor, and the instructions are executed by the at least one processor, so that the at least one processor can perform the following operations: controlling an NFC card reader on the offline smart wearable device to be in an off state; receiving, in the off state, an NFC service trigger instruction for the offline smart wearable device; entering a specified service application on the offline smart wearable device in response to the NFC service trigger instruction, and automatically switching the NFC card reader from the off state to an on state through the specified service application; after the offline smart wearable device is close to a target NFC device, reading target information from the target NFC device through the NFC card reader in the on state, and writing back user information of the offline smart wearable device to the target NFC device, so that the target NFC device interacts with a server of the specified service application based on the user information, and executes a corresponding target service; and establishing a short-range wireless communication connection with the target NFC device based on the target information, and receiving, through the short-range wireless communication connection, an execution result that is of the target service and that is returned by the target NFC device, so that the specified service application obtains the execution result, where a maximum communication distance corresponding to the short-range wireless communication connection is greater than an NFC communication distance of the target NFC device.

One or more embodiments of this specification provide an NFC service processing device for an offline smart wearable device, used in a target NFC device, where the device includes: at least one processor; and a memory communicatively connected to the at least one processor, where the memory stores instructions that can be executed by the at least one processor, and the instructions are executed by the at least one processor, so that the at least one processor can perform the following operations: after the offline smart wearable device is close to the target NFC device, to read target information from the target NFC device through an NFC card reader in an on state on the offline smart wearable device, receiving user information that is of the offline smart wearable device and that is written back by the offline smart wearable device, where the offline smart wearable device enters a specified service application on the offline smart wearable device in response to an NFC service trigger instruction, and automatically switches the NFC card reader from an off state to the on state through the specified service application; interacting with a server of the specified service application based on the user information, and executing a corresponding target service; and establishing a short-range wireless communication connection with the offline smart wearable device based on the target information, and returning an execution result of the target service to the offline smart wearable device through the short-range wireless communication connection, so that the specified service application obtains the execution result, where a maximum communication distance corresponding to the short-range wireless communication connection is greater than an NFC communication distance of the target NFC device.

The above-mentioned at least one technical solution adopted in one or more embodiments of this specification can achieve the following beneficial effects: The use of a two-dimensional code to perform some target services such as payment is avoided, thereby avoiding a problem that a user who intends to use an offline smart wearable device to perform a target service cannot perform the target service as expected when facing a merchant that does not have a code scanning and payment device; and particularly, an NFC card reader on the offline smart wearable device is actively controlled to be in an off state by default, unlike an NFC card reader on a smartphone which stays in an on state, and when needed to be used, the NFC card reader is quickly triggered to be switched to the on state through a specified service application, facilitating completion of the target service. For the specified service application, this provides high specificity and controllability and offers high security, making it very friendly to an offline smart wearable device that is sensitive to a resource and power consumption. More importantly, through clever coordination between another short-range wireless communication method and the NFC communication method, the offline smart wearable device can also complete a service normally, obtain sufficient intermediate service information (belonging to target information) and result information, and provide the user with normal experience like an online service. In the above-mentioned coordination, the intermediate service information can be directly provided to the offline smart wearable device through the NFC communication method, and relevant information (also belonging to the target information) that is of a pairing object and that is needed by the another short-range wireless communication method can be provided, so that a short-range wireless communication connection can be further smoothly and automatically established for returning the result information to the offline smart wearable device. In this process, the user only needs to hold the offline smart wearable device near target NFC for a second and then holds the device back without needing to maintain a prolonged close posture. This provides very good operation experience. Therefore, such a solution is highly suitable for the offline smart wearable device such as an offline smartwatch to perform services such as payment.

### BRIEF DESCRIPTION OF DRAWINGS

To describe the technical solutions in embodiments of this specification or in the existing technology more clearly, the following briefly describes the accompanying drawings needed for describing the embodiments or the existing technology. Clearly, the accompanying drawings in the following descriptions merely show some embodiments of this specification, and a person of ordinary skill in the art can still derive other drawings from these accompanying drawings without creative efforts.
FIG. 1 is a schematic flowchart illustrating an NFC service processing method for an offline smart wearable device, according to one or more embodiments of this specification;
FIG. 2 is a schematic flowchart illustrating a short-range wireless communication connection processing solution, according to one or more embodiments of this specification;
FIG. 3 is a schematic flowchart illustrating an assistance and interaction solution of a parent's mobile device to a children's smartwatch, according to one or more embodiments of this specification;
FIG. 4 is a schematic flowchart illustrating an NFC service cancellation assistance solution to a children's smartwatch, according to one or more embodiments of this specification;
FIG. 5 is a schematic flowchart illustrating an implementation solution of the method in FIG. 1 in an application scenario, according to one or more embodiments of this specification;
FIG. 6 is a schematic flowchart illustrating another NFC service processing method for an offline smart wearable device, according to one or more embodiments of this specification;
FIG. 7 is a diagram illustrating a structure of an NFC service processing apparatus for an offline smart wearable device, according to one or more embodiments of this specification;
FIG. 8 is a diagram illustrating a structure of another NFC service processing apparatus for an offline smart wearable device, according to one or more embodiments of this specification;
FIG. 9 is a diagram illustrating a structure of another NFC service processing device for an offline smart wearable device, according to one or more embodiments of this specification; and
FIG. 10 is a diagram illustrating a structure of another NFC service processing device for an offline smart wearable device, according to one or more embodiments of this specification.

### DESCRIPTION OF EMBODIMENTS

Embodiments of this specification provide NFC service processing methods, apparatuses, devices, and storage media for offline smart wearable devices.

To enable a person skilled in the art to better understand the technical solutions in this specification, the following clearly and comprehensively describes the technical solutions in embodiments of this specification with reference to the accompanying drawings in embodiments of this specification. Clearly, the described embodiments are merely some rather than all of the embodiments of this specification. All other embodiments obtained by a person of ordinary skill in the art based on the embodiments of this specification without creative efforts shall fall within the protection scope of this application.

The smart wearable device referred to in this application is mainly exemplified by a smartwatch, and certainly, can be another device, for example, a smart bracelet or a smart ring. Compared with a smartphone, the smart wearable device usually has a significantly smaller screen or has no screen at all, and usually has a lower battery capacity and processing capability, and therefore is more sensitive to energy consumption and computing burden. More importantly, some smart wearable devices are often in an offline state. Offline here means not being connected to a public network and only being capable of performing short-range wireless communication or local area network communication. In this application, a solution is specifically designed for such an actual case. Therefore, the devices are mostly referred to as offline smart wearable devices. Not only that, the solution is further refined and improved, especially for children's smartwatches (also for an offline case) to adapt to a case in which users thereof are minors such as children.

As mentioned in the background, currently, a payment solution on the smartphone is mainly directly ported to the smartwatch for use. A payment service based on a two-dimensional code is used as an example. A payment code can be generated on the smartwatch, a merchant scans the code with a scanning device, and a backend of the merchant initiates payment after the scanning. However, if the merchant does not have the scanning device, it may be difficult to use the smartwatch to perform payment based on the two-dimensional code. For the smartphone, since the merchant can be scanned by using the smartphone, the absence of the scanning device of the merchant does not hinder payment performed by the smartphone. However, the smartwatch poses a unique problem due to the lack of a scanning function or the inconvenience of a scanning operation. A payment service based on NFC is used as another example. Most of user mobile devices adopt a card simulation working mode. However, this method is subject to great restrictions by mobile phone manufacturers and is not sufficiently flexible. The applicant considers transplanting a solution in which a card reader working mode is actively adopted and that is used by the applicant on the smartphone to the smartwatch for use. This solution is to keep an NFC card reader on the smartphone in an on state. When an NFC card or simulated card approaches nearby, information in the card can be read through NFC, and further a corresponding application on the smartphone can be launched based on content of the information to execute a corresponding service. However, when a test is actually performed on the smartwatch, energy consumption is high, which affects a battery life of the smartwatch.

Compared with the energy consumption problem, a problem on which this application focuses more is as follows: There are many smart wearable devices that merely serve as an accessory of the smartphone, to help a same user quickly view information on a smartphone of the user or quickly perform a simple operation on the smartphone by using a smart wearable device of the user. Therefore, these smart wearable devices basically work offline and may even not have a remote communication module, and online services are completed by the smartphone. In this case, it is difficult for the smart wearable device to work independently without the smartphone.

For the above-mentioned problems, this application creates an NFC service processing solution, such as an NFC payment solution, that is more suitable for smart wearable devices (typically smartwatches).

Based on such an overall situation, the solution of this application continues to be described below.

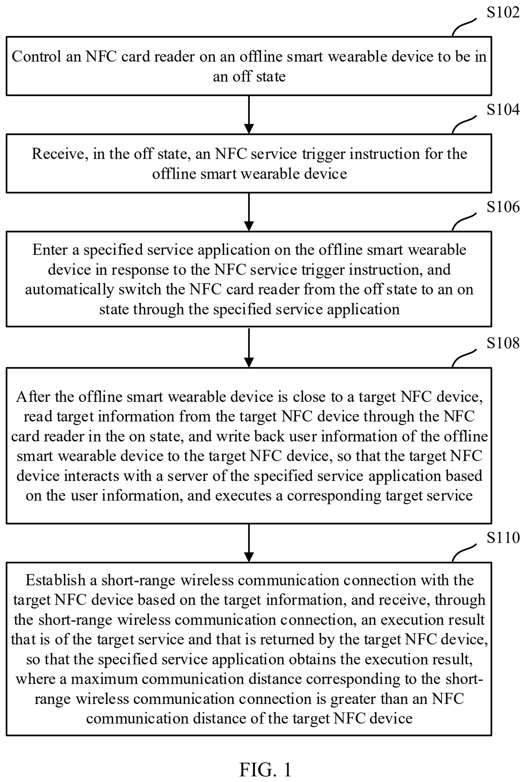

FIG. 1 is a schematic flowchart illustrating an NFC service processing method for an offline smart wearable device, according to one or more embodiments of this specification. An execution body of the procedure can include the offline smart wearable device (certainly, this solution can also be used for the online smart wearable device, but an offline situation better demonstrates advantages of this solution). At a software level, an operating system of the offline smart wearable device and a specified service application, such as a payment application and an instant messaging application, installed on the offline smart wearable device can specifically be involved. For ease of description, in some embodiments, the smartwatch that is a smart wearable device is mainly used as an example for description. The smart wearable device supports an NFC function, has an NFC card reader, and may or may not have a screen.

The procedure in FIG. 1 includes the following steps:

S102: Control an NFC card reader on the offline smart wearable device to be in an off state.

In one or more embodiments of this specification, the NFC card reader on the smart wearable device is in the off state by default, and in the off state, does not actively attempt to perform an NFC card reading operation, and does not actively monitor whether an NFC sensing object approaches nearby, which can effectively reduce energy consumption of the offline smart wearable device.

S104: Receive, in the off state, an NFC service trigger instruction for the offline smart wearable device.

When a user needs to use the NFC function of the offline smart wearable device, the user triggers the function in a predetermined convenient triggering way, so that the offline smart wearable device receives the NFC service trigger instruction.

For example, after a screen of the offline smart wearable device is turned on, an NFC service shortcut entrance is displayed, where the NFC service shortcut entrance is generated based on an NFC service non-shortcut access path of the specified service application, and is used to quickly enter an NFC card reader mode page of the specified service application; and in response to an access operation of the user on the NFC service shortcut entrance (for example, the user can click on the NFC service shortcut entrance; or implementation can be achieved based on a gesture), an NFC service trigger instruction correspondingly generated for the offline smart wearable device is received. The NFC service shortcut entrance can be displayed in an easily visible or easily accessible location, for example, directly on a desktop or a certain secondary desktop of the offline smart wearable device (for example, if the secondary desktop exists, the desktop can be switched by scrolling up or down or by scrolling left or right). Certainly, the user can also trigger an NFC service through the above-mentioned non-shortcut access path. This operation is more cumbersome.

In one or more embodiments of this specification, the NFC service trigger instruction is not simply used to trigger the NFC card reader, but corresponds to the specified service application, and first accurately trigger the NFC card reader. In this way, a subsequent state of the NFC card reader can be controlled by the specified service application (for example, the NFC card reader can be switched back to the off state in time after the service is executed and completed) without affecting other applications. This also helps accurately control energy consumption.

S106: Enter the specified service application on the offline smart wearable device in response to the NFC service trigger instruction, and automatically switch the NFC card reader from the off state to an on state through the specified service application.

In the solution previously attempted by the applicant, the NFC card reader is in a dominant position, and in the default on state, the NFC card reader triggers a corresponding application based on information that is read. However, in the solution of this application, the specified service application is enabled to be in the dominant position, and the specified service application can control a state of the NFC card reader and use the NFC card reader as needed.

After the NFC service trigger instruction is received, if the specified service application has not been launched, the specified service application is automatically launched and placed in the foreground. If the specified service application has been launched before, the specified service application is kept in the foreground to execute a target service. Not only is the specified service application entered, but also an NFC service page in the specified service application (for example, the above-mentioned NFC card reader mode page) is directly accessed. On this page, the user can be prompted with more information, such as what service the page corresponds to and how to perform a subsequent operation.

To improve security, instant verification methods such as a password or a biological characteristic can be further additionally provided. If the verification succeeds, triggering can be normally implemented. Otherwise, access to the specified service application can be denied and operation of the NFC card reader can also be denied.

S108: After the offline smart wearable device is close to a target NFC device, read target information from the target NFC device through the NFC card reader in the on state, and write back user information of the offline smart wearable device to the target NFC device, so that the target NFC device interacts with a server of the specified service application based on the user information, and executes a corresponding target service.

After the NFC card reader is switched to the on state through active triggering, if a distance between the offline smart wearable device and the target NFC device is sufficient for NFC communication, the NFC card reader can read the target information.

In one or more embodiments of this specification, the target information can include at least identification information of the target NFC device to facilitate pairing and identification of the target NFC device.

If necessary, the target information can further include target service information as intermediate service information so that instant display can be performed on the offline smart wearable device based on user needs. For example, in a payment service scenario, payment information can be read and obtained; in a social scenario, business card information can be read and obtained; etc.

The above-mentioned write-back operation can be performed by the NFC card reader or performed by a separate NFC card writer. In the former method, for example, after the NFC card reader reads information, the information can be directly written back by using an object generated in the process. Efficiency is higher and costs are low.

In one or more embodiments of this specification, the offline smart wearable device provides the user information (which may specifically be information about a user currently logged in on the specified service application) thereof to the target NFC device through write-back. Further, the target NFC device (rather than the offline smart wearable device) mainly remotely interacts with the server to complete the target service.

S110: Establish a short-range wireless communication connection with the target NFC device based on the target information, and receive, through the short-range wireless communication connection, an execution result that is of the target service and that is returned by the target NFC device, so that the specified service application obtains the execution result, where a maximum communication distance corresponding to the short-range wireless communication connection is greater than an NFC communication distance of the target NFC device.

After the write-back, a subsequent service is mainly performed by the target NFC device, and the service is closely tied to the offline smart wearable device. Therefore, the offline smart wearable device needs a way to instantly know or even intervene in a subsequent service process. One way could be to continue using NFC communication to achieve this purpose. However, an NFC communication distance is very short (usually within 10 centimeters and even needing mutual contact). If the NFC communication continues to be used, the user needs to maintain a state of prolonged contact between the offline smart wearable device and the target NFC device. This brings poor user experience, increases user uncertainty, and during this period, potentially prevents the user from normally viewing information that may be displayed on the offline smart wearable device.

To alleviate this problem, another short-range wireless communication method is actively introduced here, to cleverly coordinate with the NFC communication method. Certainly, the offline smart wearable device needs to support the short-range wireless communication method. The short-range wireless communication method can be, for example, a widely popularized Bluetooth method. Certainly, other similar short-range wireless communication methods are also acceptable. The key point is that a communication distance of the introduced short-range wireless communication method is greater than that of the NFC communication distance, so that after the user moves the offline smart wearable device away from the target NFC device, the offline smart wearable device remains within the communication distance of the short-range wireless communication method. In this way, the offline smart wearable device can continue to use the short-range wireless communication method to instantly know or even intervene in the subsequent service process.

The short-range wireless communication method needs device pairing when initially performed; otherwise, a connection is not actively established. Certainly, even the method is not initially performed, in a scenario of this application, automatic pairing is not performed if the solution of this application is not used. The reason is as follows: In daily life, the user usually allows automatic pairing of devices of the user only after initial pairing is performed on the devices, and a typical example is a smartphone and a Bluetooth headset of the user. However, in the scenario of this application, the target NFC device is not a device of the user, and therefore device pairing is not automatically performed under normal circumstances. Otherwise, issues may be brought to the target NFC device. This is because the user may not be a user that currently executes the service, easily leading to error pairing or even privacy leakage.

Based on the analysis in the previous paragraph, it can be seen that the cleverness of the above-mentioned clever coordination includes the following: During NFC interaction, the offline smart wearable device not only obtains the target service information, but also obtains the identification information of the target NFC device, and further actively performs device pairing with the target NFC device based on the identification information, thereby establishing a short-range wireless communication connection with the target NFC device, and further preventing another user from mistakenly connecting to the target NFC device.

After the connection is established, the offline smart wearable device can perform at least the following: receiving a service execution result from the target NFC device in a timely way through the connection. Certainly, if there is other information that is needed, the connection can also be used for subsequent interaction, and even an additional request can be initiated to the target NFC device.

After the NFC card reader is considered to have completed a task (for example, after the write-back is completed, the service is completed, the above-mentioned connection is broken, or set countdown ends, which can be provided as needed), the NFC card reader can be automatically switched back to the off state in a timely way through the specified service application to minimize energy consumption.

In the method in FIG. 1, the use of a two-dimensional code to perform some target services such as payment is avoided, thereby avoiding a problem that the user who intends to use the offline smart wearable device to perform the target service cannot perform the target service as expected when facing a merchant that does not have a code scanning and payment device; and particularly, the NFC card reader on the offline smart wearable device is actively controlled to be in the off state by default, unlike an NFC card reader on a smartphone which stays in an on state, and when needed to be used, the NFC card reader is quickly triggered to be switched to the on state through the specified service application, facilitating completion of the target service. For the specified service application, this provides high specificity and controllability and offers high security, making it very friendly to an offline smart wearable device that is sensitive to a resource and power consumption. More importantly, through clever coordination between another short-range wireless communication method and the NFC communication method, the offline smart wearable device can also complete a service normally, obtain sufficient intermediate service information (belonging to target information) and result information, and provide the user with normal experience like an online service. In the above-mentioned coordination, the intermediate service information can be directly provided to the offline smart wearable device through the NFC communication method, and relevant information (also belonging to the target information) that is of a pairing object and that is needed by the another short-range wireless communication method can be provided, so that a short-range wireless communication connection can further be smoothly and automatically established for returning the result information to the offline smart wearable device. In this process, the user only needs to hold the offline smart wearable device near target NFC for a second and then holds the device back without needing to maintain a prolonged close posture. This provides very good operation experience. Therefore, such a solution is highly suitable for the offline smart wearable device such as an offline smartwatch to perform services such as payment.

Based on the method in FIG. 1, this specification further provides some specific implementation solutions and extension solutions of the method, which are further described below.

In one or more embodiments of this specification, after the screen of the smart wearable device is turned on, an NFC service shortcut entrance is displayed, where the NFC service shortcut entrance is generated based on an NFC service non-shortcut access path of the specified service application, and is used to quickly enter an NFC card reader mode page of the specified service application; and in response to an access operation of the user on the NFC service shortcut entrance, an NFC service trigger instruction correspondingly generated for the smart wearable device is received.

Further, although a shortcut icon can be used as the NFC service shortcut entrance and accessed by using a clicking operation, the operation is still not sufficiently smooth. Based on this, this application further provides a smoother triggering solution to trigger an NFC service.

In this solution, screen-on of the smart wearable device can be triggered by the user through a first gesture, and the NFC service shortcut entrance prompts a second gesture. Both the first gesture and the second gesture do not belong to the click operation, and may not belong to a biological characteristic verification operation. Therefore, in this case, the NFC service shortcut entrance may not be used for click-to-enter, and the user only needs to view the NFC service shortcut entrance. The first gesture is, for example, a gesture of raising the hand to look at a watch. The second gesture is, for example, a gesture of further changing a direction of the hand (for example, a gesture of sending the hand forward or a gesture of quickly waving the hand horizontally). For example, the user can raise the hand to look at the smartwatch to trigger screen-on of the watch face, and then see what the second gesture is through the displayed NFC service shortcut entrance. Assume that the gesture is the gesture of sending the hand forward, and further the hand can be moved forward and closer to the target NFC device in front, thereby triggering the NFC service. It can be seen that this operation process is very smooth, minimizes unnecessary operations, and provides good user experience, taking into account energy saving, security needs, and convenience needs.

Further, to reduce a probability of an error operation, a second gesture that may be different may be dynamically adopted each time. In this case, the user may need to look each time at the NFC service shortcut entrance displayed on a screen that is turned on.

Similarly, the above solution based on the coordination between the first gesture and the second gesture can alternatively be used for a smart wearable device without a screen. In this case, for example, a fixed first gesture and a fixed second gesture (for example, allowed to be predetermined by the user) can be used, a second gesture can be dynamically used based on a voice prompt, etc.

In one or more embodiments of this specification, to facilitate mastering of a real-time situation by the user, a control status of the NFC card reader can be explicitly displayed to guide and, to a certain extent, constrain the user. This helps improve security and further helps ensure that energy consumption is controlled to an expected level. Based on this concept, a solution for controlling and coordinating the NFC card reader on the offline smart wearable device is provided.

The solution may specifically include the following: After the NFC card reader is switched from the off state to the on state, progress change prompt information corresponding to the on state is displayed on the offline smart wearable device; based on the progress change prompt information, if it is determined that corresponding progress is completed, the specified service application is placed in the background or turned off, or the NFC card reader is switched back to the off state.

The progress change prompt information may include: countdown information and/or detected progress information of the target service. For a case of the countdown information, after the on state is switched to, a countdown task can be established and executed, and remaining operation time of the user or current remaining available time of the NFC card reader is displayed on an interface. For the user, this method has a higher level of compulsion. For a case of the detected progress information of the target service, before which stage points the NFC card reader still needs to be used can be displayed based on one or more landmark stage points in a target service execution process. Involved specific work of the NFC card reader at these stage points can be further prompted. For the user, this method has greater clarity and transparency, particularly applicable to user groups such as minors or the elderly.

To prevent the NFC card reader from being unnecessarily continuously kept in the on state, based on progress monitoring (for example, when ending of a countdown is determined; for example, when arrival of a landmark stage point after a usage stage of the NFC card reader is determined; etc.), the specified service application can be automatically deactivated as soon as possible. In particular, the NFC card reader can be automatically switched back to the off state in a timely way to prevent resource monopoly and increased energy consumption.

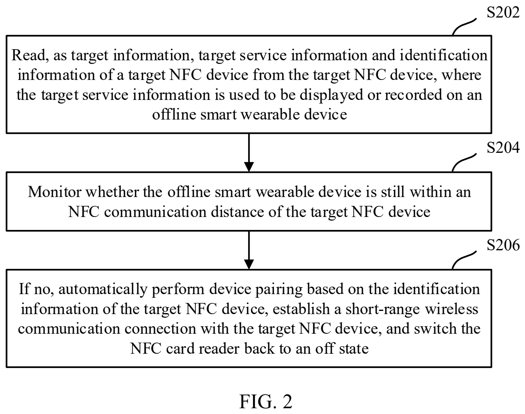

Based on the above-mentioned description of the ideas for the short-range wireless communication connection, one or more embodiments of this specification further provide a schematic flowchart illustrating a short-range wireless communication connection processing solution, referring to FIG. 2.

The procedure in FIG. 2 includes the following steps:

S202: Read, as target information, target service information and identification information of a target NFC device from the target NFC device, where the target service information is used to be displayed or recorded on an offline smart wearable device.

S204: Monitor whether the offline smart wearable device is still within an NFC communication distance of the target NFC device.

S206: If no, automatically perform device pairing based on the identification information of the target NFC device, establish a short-range wireless communication connection with the target NFC device, and switch the NFC card reader back to the off state.

If it is detected that the device is no longer within the NFC communication distance, it is likely that the user takes away the offline smart wearable device. In this case, the offline smart wearable device temporarily cannot acquire subsequent service-related information. This is a good opportunity to switch to short-range wireless communication.

If it is detected that the device is still within the NFC communication distance, NFC communication can continue to be adopted and the short-range wireless communication connection is not established temporarily. In this way, whether automatic device pairing is needed can be adaptively and intelligently decided, thereby avoiding wasting a resource. Moreover, since the identification information is read at the same time, no burden is brought to both parties.

In actual applications, since many minors, especially children, are usually restricted, by parents or schools of the minors, from using smartphones, this group uses children's smartwatches more as a substitute to a certain extent. In this case, the above-mentioned offline smart wearable device can specifically be a children's smartwatch. This application focuses on the particularity of this case and further improves the above basic solution.

The applicant mainly summarizes two aspects of problems caused by particularity in this case. In a first aspect, the children's smartwatch is less adaptable than an adult smartwatch, resulting in fewer NFC devices that can well support the children's smartwatch, or even if the children's smartwatch is supported, the children's smartwatch cannot be normally used due to a limitation in a service aspect, and has a poor network capability. In a second aspect, because the children's smartwatch is used by a minor, or even a very young child, aspects such as security and behavioral effectiveness are put to the test.

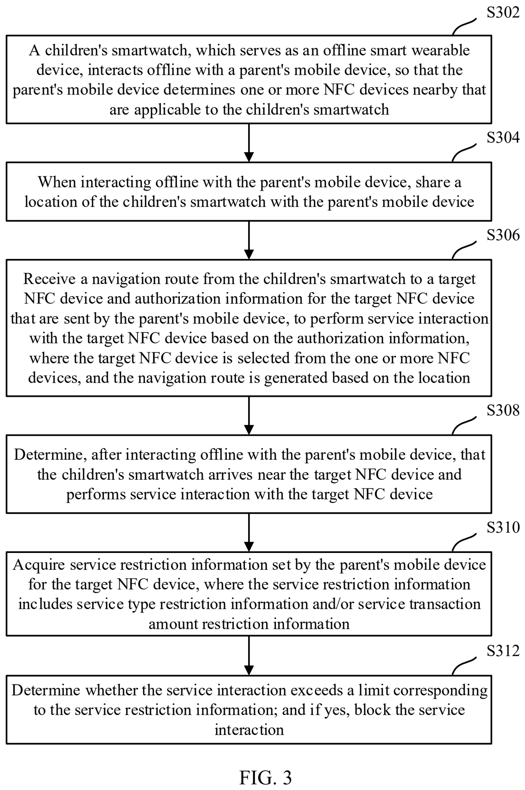

For the problem in the first aspect, this application considers enabling the children's smartwatch to obtain a capability of determining an applicable NFC device nearby. However, in actual applications, capabilities of the children's smartwatch are limited and difficult to achieve, and there is a risk in a security aspect. To alleviate the problem, this application provides an assistance and interaction solution of a parent's mobile device to a children's smartwatch. FIG. 3 is a schematic flowchart illustrating the solution.

The procedure in FIG. 3 includes the following steps:

S302: The children's smartwatch, which serves as an offline smart wearable device, interacts offline with the parent's mobile device, so that the parent's mobile device determines one or more NFC devices nearby that are applicable to the children's smartwatch.

The parent's mobile device is held by a parent of a user of the children's smartwatch. The children's smartwatch can display, for example, an interactive two-dimensional code. The parent's mobile device scans the code (in this way, interaction can be implemented even when the children's smartwatch is offline; and certainly, offline interaction can alternatively be performed by using another short-range communication method independent of a public network, and some of subsequent information can also be exchanged offline). This triggers the parent's mobile device to query the NFC devices nearby applicable to the children's smartwatch. The interactive two-dimensional code can be used to determine information such as a model or a capability of the children's smartwatch. There can be a plurality of available such two-dimensional codes, respectively corresponding to different functions or services. One is selected on the children's smartwatch to provide to the parent's mobile device, to more precisely query and filter applicable NFC devices based on such function or service dimensions.

The parent's mobile device can be a smartphone, a tablet computer, or a car computer with a larger and more powerful screen and capability than the children's smartwatch. This enables the parent's mobile device to be capable of querying and displaying one or more NFC devices applicable to the children's smartwatch. Certainly, if the capability is sufficiently strong, the parent's mobile device can alternatively be a device such as an adult smartwatch.

S304: When interacting offline with the parent's mobile device, share a location of the children's smartwatch with the parent's mobile device.

In the case of offline interaction, it is considered that the parent is likely to be near the child. In this case, the location sharing operation can alternatively be omitted and a location of the parent's mobile device can be directly used. In this way, there is no need to unnecessarily expose location information from the children's smartwatch. If location sharing is performed, for example, the location can be included in the above-mentioned interactive two-dimensional code.

S306: Receive a navigation route from the children's smartwatch to the target NFC device and authorization information for the target NFC device that are sent by the parent's mobile device, to perform service interaction with the target NFC device based on the authorization information, where the target NFC device is selected from the one or more NFC devices, and the navigation route is generated based on the location.

After the parent's mobile device queries and determines the applicable NFC devices, there are a plurality of usage solutions. For example, the parent can alternatively directly show the NFC devices to the child on the parent's mobile device. The solution in step S306 to step S312 is a more comprehensive solution.

In one or more embodiments of this specification, the target NFC device is selected by the parent, and the authorization information is set by the parent accurately for the target NFC device, rather than generally for the children's smartwatch. In this way, risks of a current service that the child can subsequently execute on the target NFC device can be accurately and more timely controlled. In other words, one time of accurate authorization performed by the parent for a service object of the child is implemented, preventing the child from abusing the children's smartwatch to execute a service with the NFC device, while ensuring immediate and high control of the parent, thereby helping improve security and helping prevent the target NFC device from doing evil.

S308: Determine, after interacting offline with the parent's mobile device, that the children's smartwatch arrives near the target NFC device and performs service interaction with the target NFC device.

S310: Acquire service restriction information set by the parent's mobile device for the target NFC device, where the service restriction information includes service type restriction information and/or service transaction amount restriction information.

The service restriction information can be included in the above-mentioned authorization information or can be set independently. In the latter case, the authorization information is not necessarily needed, and the parent can perform light control by using only the service restriction information.

S312: Determine whether the service interaction exceeds a limit corresponding to the service restriction information; and if yes, block the service interaction.

It is worthwhile to note that in the above-mentioned illustrative solution, efforts are made to block risks at a source (for example, the NFC device) based on the authorization information and/or the service restriction information. This method can be particularly implemented through coordination with a server corresponding to the NFC device (which also belongs to a server corresponding to the children's smartwatch). In this way, determining of restrictions can alternatively be performed by the server. This can reduce the burden on the children's smartwatch. In this case, the parent can report both the authorization information and/or the service restriction information to the server instead of directly to the children's smartwatch. The server oversees and controls subsequent service behavior of the target NFC device. In this way, the burden on the children's smartwatch is further reduced. Moreover, the child can ensure the security of the device and the service of the child without concerning these background actions.

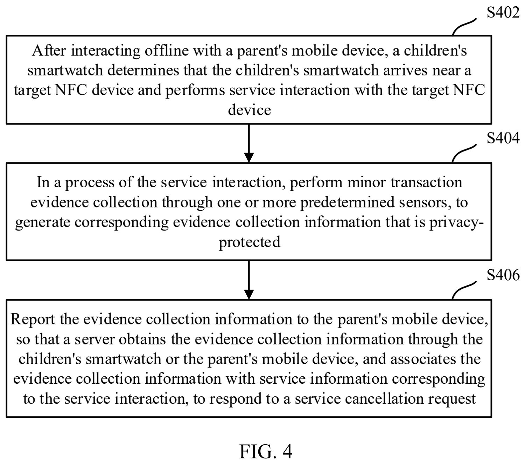

Further, to prevent losses caused by abusing the children's smartwatch by the child to execute an NFC service, one or more embodiments of this specification further provide a schematic flowchart illustrating an NFC service cancellation assistance solution to a children's smartwatch, referring to FIG. 4.

The procedure in FIG. 4 includes the following steps:

S402: After interacting offline with a parent's mobile device, the children's smartwatch determines that the children's smartwatch arrives near a target NFC device and performs service interaction with the target NFC device.

S404: In a process of the service interaction, perform minor transaction evidence collection through one or more predetermined sensors, to generate corresponding evidence collection information that is privacy-protected.

The transaction evidence collection is automatically performed before or during the service interaction. It is worthwhile to note that the evidence collection information obtained through the minor transaction evidence collection here is mainly intended to prove that the transacting individual is a minor, not for identity verification. Audio, video, or other sensors can be used to perform corresponding evidence collection.

Here, it is considered that the children's smartwatch may not have a camera, a capability of the camera is not sufficiently high, or the camera is not sufficiently convenient to use. Therefore, a preferred solution for evidence collection based mainly on audio is further provided. Certainly, image evidence collection can be further combined. However, it is worthwhile to note that the audio evidence collection here is not a simple automatic voice recording, but also includes an active guided dialogue, to ensure both friendliness to minors and sufficient effectiveness of the evidence collection.

In this solution, specifically, for example, an evidence collection guidance dialogue model for the minors is pre-trained. Particular emphasis here is placed on learning a speech pattern of the minors and learning information about a rigor logical chain of needed evidence. Based on needs of the two dimensions, the trained evidence collection guidance dialogue model is used to generate a real-time voice dialogue. The dialogue is delivered through the children's smartwatch at an appropriate moment before or during the service interaction to guide a current minor to perform a Q&A dialogue, to confirm that the current transaction is performed by the minor indeed and confirm some needed background information details (for example, whether a parent is at presence, whether the minor independently intends to perform a purchase, whether there is inducement of a merchant). Automatically recorded voice dialogue content is used as the evidence collection information, or the content is used as the evidence collection information after further refinement. Certainly, privacy protection can be further performed by using methods such as secure computation, encryption, or obfuscation to prevent exposure of the minor's privacy and further help prevent the evidence collection information from being tampered.

S406: Report the evidence collection information to the parent's mobile device, so that the server obtains the evidence collection information through the children's smartwatch or the parent's mobile device, and associates the evidence collection information with service information corresponding to the service interaction, to respond to a service cancellation request.

After executing a service through the children's smartwatch, if the parent feels that the service is inappropriate or even deceptive (for example, the merchant induces the minor to spend money to recharge), the parent can initiate a corresponding service cancellation request to the server, where the service cancellation request is associated with corresponding evidence collection information. In this way, the server side can more intelligently analyze and decide whether to allow cancellation of a corresponding service based on the evidence collection information. In this way, fairness and efficiency are better, thereby helping avoid liability disputes between the merchant and the user and truly protecting interests of a reasonable party.

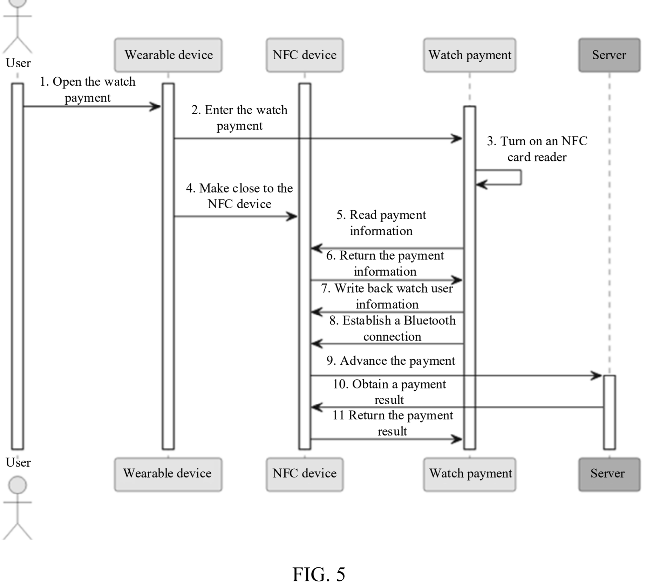

According to the foregoing descriptions, to understand a main idea ofthis application in a typical and concise way, one or more embodiments of this specification provide a schematic flowchart illustrating an implementation solution of the method in FIG. 1 in an application scenario, referring to FIG. 5.

In this application scenario, a main body of "watch payment" in the figure can specifically be a watch payment application, as the above-mentioned specified service application, a main body of "wearable device" can specifically be a smartwatch, especially a children's smartwatch, as the above-mentioned offline smart wearable device, and an NFC device is owned by a merchant and serves as the above-mentioned target NFC device.

In the procedure shown in FIG. 5, an NFC card reader of the smartwatch is in an off state by default. A user can click, for example, an NFC shortcut on the smartwatch to trigger launching of the watch payment application, and directly enter an NFC card reader mode page within the watch payment application. The watch payment application automatically turns on the NFC card reader of the smartwatch, and enables the NFC card reader to be in an on state temporarily. Then, the user can enable the smartwatch to be close to the NFC device of the merchant, so that the NFC card reader reads payment information from the NFC device and returns the payment information to the watch payment application, and can further read identification information of the NFC device and writes back information of the user. Afterwards, the watch payment application can automatically trigger to establish a Bluetooth connection between the smartwatch and the NFC device based on the identification information, so that the NFC device interacts with a server by using the payment information and the user information to process the payment, acquires a payment result from the server, and further returns the payment result back to the watch payment application through the Bluetooth connection.

After the NFC card reader is turned on, for example, a countdown can be displayed. After the countdown ends, the watch payment application can be placed to the background or even turned off, and the NFC card reader can be automatically switched back to the off state.

In this way, even if the smartwatch remains in an offline state throughout the entire process, the user can still normally complete a payment service, with experience basically identical to that of an online scenario, thereby helping expand application scenarios for an offline smartwatch and meet more user needs.

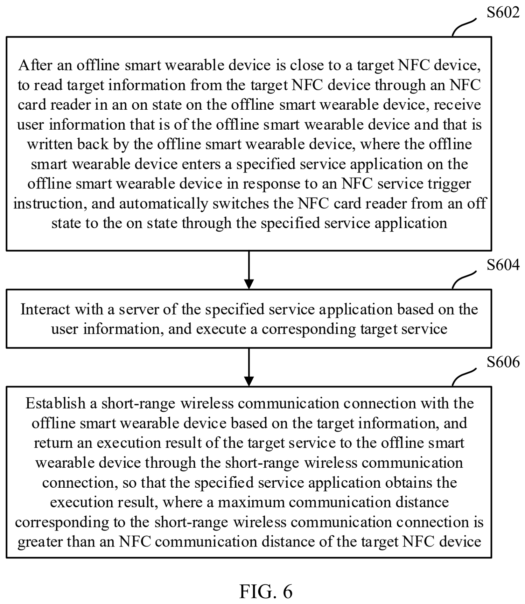

The above is mainly described from a perspective of the offline smart wearable device. Based on the same idea, one or more embodiments of this specification further provide another NFC service processing method for an offline smart wearable device, described from a perspective of a target NFC device. FIG. 6 is a schematic flowchart illustrating the another method.

The procedure in FIG. 6 includes the following steps:

S602: After the offline smart wearable device is close to the target NFC device, to read target information from the target NFC device through an NFC card reader in an on state on the offline smart wearable device, receive user information that is of the offline smart wearable device and that is written back by the offline smart wearable device, where the offline smart wearable device enters a specified service application on the offline smart wearable device in response to an NFC service trigger instruction, and automatically switches the NFC card reader from an off state to the on state through the specified service application.

S604: Interact with a server of the specified service application based on the user information, and execute a corresponding target service.

S606: Establish a short-range wireless communication connection with the offline smart wearable device based on the target information, and return an execution result of the target service to the offline smart wearable device through the short-range wireless communication connection, so that the specified service application obtains the execution result, where a maximum communication distance corresponding to the short-range wireless communication connection is greater than an NFC communication distance of the target NFC device.

For details, references can be made to the above-mentioned descriptions for understanding, and details are omitted here for simplicity.

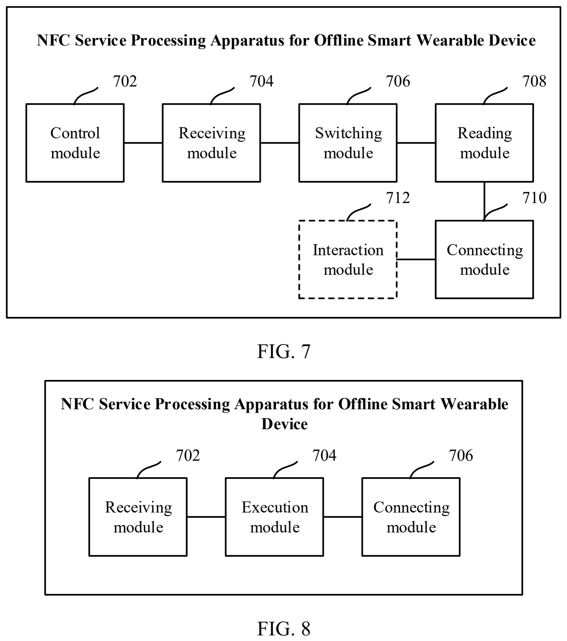

Based on the same idea, one or more embodiments of this specification further provide apparatuses and devices corresponding to the above-mentioned methods, as shown in FIG. 7 to FIG. 10. The apparatuses and the devices can correspondingly perform the above-mentioned methods and related optional solutions.

FIG. 7 is a schematic diagram illustrating a structure of an NFC service processing apparatus for an offline smart wearable device, according to one or more embodiments of this specification, where the apparatus is used in an offline smart wearable device, and the apparatus includes: a control module 702, configured to control an NFC card reader on the offline smart wearable device to be in an off state; a receiving module 704, configured to receive, in the off state, an NFC service trigger instruction for the offline smart wearable device; a switching module 706, configured to enter a specified service application on the offline smart wearable device in response to the NFC service trigger instruction, and automatically switch the NFC card reader from the off state to an on state through the specified service application; a reading module 708, configured to: after the offline smart wearable device is close to a target NFC device, read target information from the target NFC device through the NFC card reader in the on state, and write back user information of the offline smart wearable device to the target NFC device, so that the target NFC device interacts with a server of the specified service application based on the user information, and executes a corresponding target service; and a connecting module 710, configured to: establish a short-range wireless communication connection with the target NFC device based on the target information, and receive, through the short-range wireless communication connection, an execution result that is of the target service and that is returned by the target NFC device, so that the specified service application obtains the execution result, where a maximum communication distance corresponding to the short-range wireless communication connection is greater than an NFC communication distance of the target NFC device.

Optionally, the switching module 706 displays, after switching the NFC card reader from the off state to the on state, progress change prompt information corresponding to the on state, where the progress change prompt information includes: countdown information and/or detected progress information of the target service; and based on the progress change prompt information, if it is determined that corresponding progress is completed, places the specified service application in the background or closes the specified service application, or switches the NFC card reader back to the off state.

Optionally, the reading module 708 reads, as target information, target service information and identification information of the target NFC device from the target NFC device, where the target service information is used to be displayed or recorded on the offline smart wearable device.

The connecting module 710 automatically performs device pairing based on the identification information of the target NFC device and establishes the short-range wireless communication connection with the target NFC device.

Optionally, the connecting module 710 monitors whether the offline smart wearable device is still within an NFC communication distance of the target NFC device; and if no, establishes the short-range wireless communication connection with the target NFC device based on the target information, and switches the NFC card reader back to the off state.

Optionally, the short-range wireless communication connection is a Bluetooth connection.

Optionally, the offline smart wearable device is a smartwatch.

Optionally, the offline smart wearable device is a children's smartwatch.

The apparatus further includes: an interaction module 712, configured to interact offline with a parent's mobile device, so that the parent's mobile device determines one or more NFC devices nearby that are applicable to the children's smartwatch.

Optionally, the interaction module 712 shares a location of the children's smartwatch with the parent's mobile device, where the parent's mobile device is a smartphone or a tablet computer; and receives a navigation route from the children's smartwatch to the target NFC device and authorization information for the target NFC device that are sent by the parent's mobile device, to perform service interaction with the target NFC device based on the authorization information, where the target NFC device is selected from the one or more NFC devices, and the navigation route is generated based on the location.

Optionally, the interaction module 712 determines, after interacting offline with the parent's mobile device, that the children's smartwatch arrives near the target NFC device and performs service interaction with the target NFC device; acquires service restriction information set by the parent's mobile device for the target NFC device, where the service restriction information includes service type restriction information and/or service transaction amount restriction information; and determines whether the service interaction exceeds a limit corresponding to the service restriction information; and if yes, blocks the service interaction.

Optionally, the interaction module 712 determines, after interacting offline with the parent's mobile device, that the children's smartwatch arrives near the target NFC device and performs service interaction with the target NFC device; in a process of the service interaction, performs minor transaction evidence collection through one or more predetermined sensors, to generate corresponding evidence collection information that is privacy-protected; and reports the evidence collection information to the parent's mobile device, so that the server obtains the evidence collection information through the children's smartwatch or the parent's mobile device, and associates the evidence collection information with service information corresponding to the service interaction, to respond to a service cancellation request.

Optionally, the target service includes a payment service.

FIG. 8 is a schematic diagram illustrating a structure of another NFC service processing apparatus for an offline smart wearable device, according to one or more embodiments of this specification, where the apparatus is used in a target NFC device, and the apparatus includes: a receiving module 802, configured to: after the offline smart wearable device is close to the target NFC device, to read target information from the target NFC device through an NFC card reader in an on state on the offline smart wearable device, receive user information that is of the offline smart wearable device and that is written back by the offline smart wearable device, where the offline smart wearable device enters a specified service application on the offline smart wearable device in response to an NFC service trigger instruction, and automatically switches the NFC card reader from an off state to the on state through the specified service application; an execution module 804, configured to: interact with a server of the specified service application based on the user information, and execute a corresponding target service; and a connecting module 806, configured to: establish a short-range wireless communication connection with the offline smart wearable device based on the target information, and return an execution result of the target service to the offline smart wearable device through the short-range wireless communication connection, so that the specified service application obtains the execution result, where a maximum communication distance corresponding to the short-range wireless communication connection is greater than an NFC communication distance of the target NFC device.

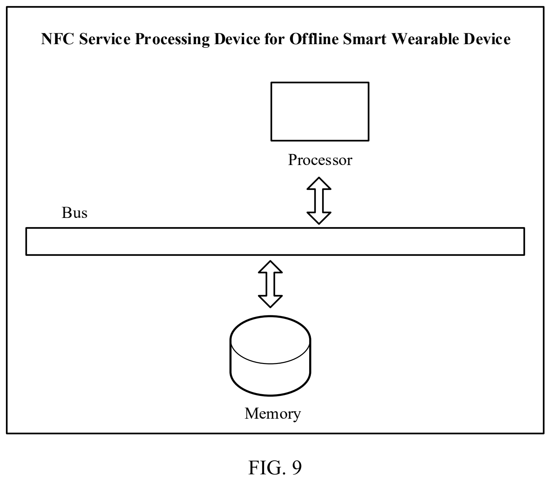

FIG. 9 is a schematic diagram illustrating a structure of an NFC service processing device for an offline smart wearable device, according to one or more embodiments of this specification, where the device is used in the offline smart wearable device, and the device includes: at least one processor; and a memory communicatively connected to the at least one processor, where the memory stores instructions that can be executed by the at least one processor, and the instructions are executed by the at least one processor, so that the at least one processor can perform the following operations: controlling an NFC card reader on the offline smart wearable device to be in an off state; receiving, in the off state, an NFC service trigger instruction for the offline smart wearable device; entering a specified service application on the offline smart wearable device in response to the NFC service trigger instruction, and automatically switching the NFC card reader from the off state to an on state through the specified service application; after the offline smart wearable device is close to a target NFC device, reading target information from the target NFC device through the NFC card reader in the on state, and writing back user information of the offline smart wearable device to the target NFC device, so that the target NFC device interacts with a server of the specified service application based on the user information, and executes a corresponding target service; and establishing a short-range wireless communication connection with the target NFC device based on the target information, and receiving, through the short-range wireless communication connection, an execution result that is of the target service and that is returned by the target NFC device, so that the specified service application obtains the execution result, where a maximum communication distance corresponding to the short-range wireless communication connection is greater than an NFC communication distance of the target NFC device.

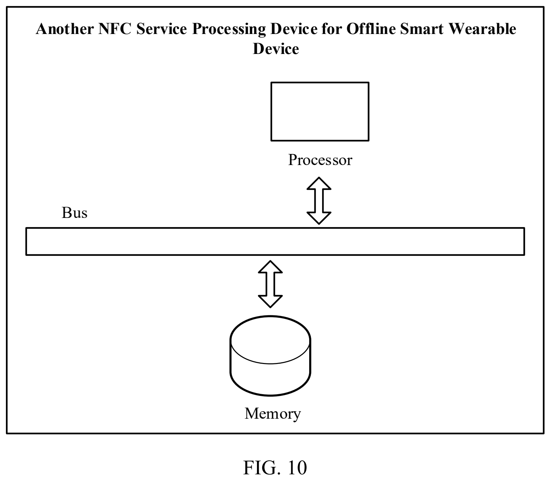

FIG. 10 is a schematic diagram illustrating a structure of another NFC service processing device for an offline smart wearable device, according to one or more embodiments of this specification, where the device is used in a target NFC device, and the device includes: at least one processor; and a memory communicatively connected to the at least one processor, where the memory stores instructions that can be executed by the at least one processor, and the instructions are executed by the at least one processor, so that the at least one processor can perform the following operations: after the offline smart wearable device is close to the target NFC device, to read target information from the target NFC device through an NFC card reader in an on state on the offline smart wearable device, receiving user information that is of the offline smart wearable device and that is written back by the offline smart wearable device, where the offline smart wearable device enters a specified service application on the offline smart wearable device in response to an NFC service trigger instruction, and automatically switches the NFC card reader from an off state to the on state through the specified service application; interacting with a server of the specified service application based on the user information, and executing a corresponding target service; and establishing a short-range wireless communication connection with the offline smart wearable device based on the target information, and returning an execution result of the target service to the offline smart wearable device through the short-range wireless communication connection, so that the specified service application obtains the execution result, where a maximum communication distance corresponding to the short-range wireless communication connection is greater than an NFC communication distance of the target NFC device.

Based on the same idea, one or more embodiments of this specification further provide a non-volatile computer storage medium, used in an offline smart wearable device. The medium stores computer-executable instructions, and the computer-executable instructions are set as follows: controlling an NFC card reader on the offline smart wearable device to be in an off state; receiving, in the off state, an NFC service trigger instruction for the offline smart wearable device; entering a specified service application on the offline smart wearable device in response to the NFC service trigger instruction, and automatically switching the NFC card reader from the off state to an on state through the specified service application; after the offline smart wearable device is close to a target NFC device, reading target information from the target NFC device through the NFC card reader in the on state, so that the specified service application obtains the target information; and executing a corresponding target service through the specified service application based on the target information.

One or more embodiments of this specification further provide another non-volatile computer storage medium, used in a target NFC device. The medium stores computer-executable instructions, and the computer-executable instructions are set as follows: after the offline smart wearable device is close to the target NFC device, to read target information from the target NFC device through an NFC card reader in an on state on the offline smart wearable device, receiving user information that is of the offline smart wearable device and that is written back by the offline smart wearable device, where the offline smart wearable device enters a specified service application on the offline smart wearable device in response to an NFC service trigger instruction, and automatically switches the NFC card reader from an off state to the on state through the specified service application; interacting with a server of the specified service application based on the user information, and executing a corresponding target service; and establishing a short-range wireless communication connection with the offline smart wearable device based on the target information, and returning an execution result of the target service to the offline smart wearable device through the short-range wireless communication connection, so that the specified service application obtains the execution result, where a maximum communication distance corresponding to the short-range wireless communication connection is greater than an NFC communication distance of the target NFC device.

In the 1990s, whether a technical improvement is a hardware improvement (for example, an improvement to a circuit structure, such as a diode, a transistor, or a switch) or a software improvement (an improvement to a method procedure) can be clearly distinguished. However, as technologies develop, current improvements to many method procedures can be considered as direct improvements to hardware circuit structures. Almost all designers obtain the corresponding hardware circuit structure by programming the improved method procedure into the hardware circuit. Therefore, a method procedure can be improved by using a hardware entity module. For example, a programmable logic device (PLD) (for example, a field programmable gate array (FPGA)) is such an integrated circuit, and a logical function of the PLD is determined by a user through device programming. The designer performs programming to "integrate" a digital system into a PLD without requesting a chip manufacturer to design and produce an application-specific integrated circuit chip. In addition, currently, instead of manually manufacturing an integrated circuit chip, such programming is mostly implemented by using "logic compiler" software. The "logic compiler" software is similar to a software compiler used to develop and write a program. Original code needs to be written in a particular programming language before being compiled. The language is referred to as a hardware description language (HDL). There are many HDLs such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). Currently, the Very-High-Speed Integrated Circuit Hardware Description Language (VHDL) and Verilog are most commonly used. It should also be clear to a person skilled in the art that a hardware circuit for implementing a logical method procedure can be easily obtained by performing slight logic programming on the method procedure by using the above-mentioned several hardware description languages and programming the method procedure into an integrated circuit.

A controller can be implemented by using any appropriate method. For example, the controller can be in a form of a microprocessor or a processor, a computer-readable medium that stores computer-readable program code (such as software or firmware) that can be executed by the microprocessor or the processor, a logic gate, a switch, an application-specific integrated circuit (ASIC), a programmable logic controller, or an embedded microcontroller. Examples of the controller include but are not limited to the following microcontrollers: ARC 625D, Atmel AT91SAM, Microchip PIC18F26K20, and Silicon Labs C8051F320. A storage controller can also be implemented as a part of control logic of a storage. A person skilled in the art also knows that in addition to implementing the controller by using only the computer-readable program code, logic programming can be performed on method steps to enable the controller to implement the same function in a form of a logic gate, a switch, an application-specific integrated circuit, a programmable logic controller, an embedded microcontroller, etc. Therefore, the controller can be considered as a hardware component, and an apparatus that is configured to implement various functions and that is included in the controller can also be considered as a structure in the hardware component. Alternatively, the apparatus configured to implement various functions can even be considered as both a software module implementing a method and a structure in the hardware component.

The system, apparatus, module, or unit described in the above-mentioned embodiments can be specifically implemented by a computer chip or an entity, or can be implemented by a product having a certain function. A typical implementation device is a computer. For example, the computer can be, for example, a personal computer, a laptop computer, a cellular phone, a camera phone, a smartphone, a personal digital assistant, a media player, a navigation device, an email device, a game console, a tablet computer, or a wearable device, or a combination of any of these devices.

For ease of description, the above apparatus is described by dividing functions into various units. Certainly, when this specification is implemented, functions of the units can be implemented in one or more pieces of software and/or hardware.

A person skilled in the art should understand that embodiments of this specification can be provided as methods, systems, or computer program products. Therefore, the embodiments of this specification can use a form of hardware only embodiments, software only embodiments, or embodiments with a combination of software and hardware. In addition, a form of a computer program product that is implemented on one or more computer-usable storage media (including but not limited to a disk storage, a CD-ROM, an optical storage, etc.) that include computer-usable program code can be used in the embodiments of this specification.

This specification is described with reference to the flowcharts and/or block diagrams of the method, the device (system), and the computer program product according to embodiments of this specification. It is worthwhile to understand that computer program instructions can be used to implement each procedure and/or each block in the flowcharts and/or the block diagrams and a combination of procedures and/or a combination of blocks in the flowcharts and/or the block diagrams. These computer program instructions can be provided for a general-purpose computer, a special-purpose computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions can alternatively be stored in a computer-readable storage that can instruct the computer or the another programmable data processing device to work in a specific way, so the instructions stored in the computer-readable storage generate an artifact that includes an instruction apparatus. The instruction apparatus implements a specific function in one or more procedures in the flowcharts and/or in one or more blocks in the block diagrams.

These computer program instructions can alternatively be loaded onto the computer or the another programmable data processing device, so that a series of operation steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

It is worthwhile to note that the term "include", "include" or any other variant thereof is intended to cover non-exclusive inclusion, so that a process, method, product, or device that includes a series of elements includes not only those elements but also other elements that are not explicitly listed, or includes elements inherent in such a process, method, product, or device. Without more constraints, an element preceded by "includes a ..." does not preclude the existence of additional identical elements in the process, method, product, or device that includes the element.

The embodiments in this specification are described in a progressive way. A same similar part of the embodiments can be referred to each other, and each embodiment focuses on a difference from another embodiment. Particularly, the apparatus, device, and non-volatile computer storage medium embodiments are basically similar to the method embodiment, and therefore is briefly described. For a related part, refer to some descriptions in the method embodiment.

Specific embodiments of this specification are described above. Other embodiments fall within the scope of the appended claims. In some cases, the actions or steps described in the claims can be performed in an order different from that in the embodiments and desired results can still be achieved. In addition, the process depicted in the accompanying drawings does not necessarily require a particular sequence or sequential sequence shown to achieve the desired result. In some implementations, multitasking and parallel processing are feasible or may be advantageous.

The above-mentioned content is merely one or more embodiments of this specification, and is not intended to limit this specification. A person skilled in the art knows that one or more embodiments of this specification can have various modifications and changes. Any modification, equivalent replacement, improvement, etc. made within the spirit and principle of one or more embodiments of this specification shall fall within the scope of the claims of this specification.

### EXAMPLES

Although the present invention is defined in the claims, it should be understood that the present invention can also (alternatively) be defined in accordance with the following examples:
1. An NFC service processing method for an offline smart wearable device, applied to the offline smart wearable device, wherein the method comprises:
   controlling an NFC card reader on the offline smart wearable device to be in an off state;
   receiving, in the off state, an NFC service trigger instruction for the offline smart wearable device;
   entering a specified service application on the offline smart wearable device in response to the NFC service trigger instruction, and automatically switching the NFC card reader from the off state to an on state through the specified service application;
   after the offline smart wearable device is close to a target NFC device, reading target information from the target NFC device through the NFC card reader in the on state, and writing back user information of the offline smart wearable device to the target NFC device, so that the target NFC device interacts with a server of the specified service application based on the user information, and executes a corresponding target service; and
   establishing a short-range wireless communication connection with the target NFC device based on the target information, and receiving, through the short-range wireless communication connection, an execution result that is of the target service and that is returned by the target NFC device, so that the specified service application obtains the execution result, wherein a maximum communication distance corresponding to the short-range wireless communication connection is greater than an NFC communication distance of the target NFC device.
2. The method according to example 1, wherein after the switching the NFC card reader from the off state to an on state, the method further comprises:
   displaying progress change prompt information corresponding to the on state, wherein the progress change prompt information comprises: countdown information and/or detected progress information of the target service; and
   based on the progress change prompt information, if it is determined that corresponding progress is completed, placing the specified service application in the background or closing the specified service application, or switching the NFC card reader back to the off state.
3. The method according to example 1, wherein the reading target information from the target NFC device specifically comprises:
   reading, as the target information, target service information and identification information of the target NFC device from the target NFC device, wherein the target service information is used to be displayed or recorded on the offline smart wearable device; and
   the establishing a short-range wireless communication connection with the target NFC device based on the target information specifically comprises:
      automatically performing device pairing based on the identification information of the target NFC device and establishing the short-range wireless communication connection with the target NFC device.
4. The method according to example 1, wherein the establishing a short-range wireless communication connection with the target NFC device based on the target information specifically comprises:
   monitoring whether the offline smart wearable device is still within an NFC communication distance of the target NFC device; and
   if no, establishing the short-range wireless communication connection with the target NFC device based on the target information, and switching the NFC card reader back to the off state.
5. The method according to any one of examples 1 to 4, wherein the short-range wireless communication connection is a Bluetooth connection.
6. The method according to any one of examples 1 to 4, wherein the offline smart wearable device is a smartwatch.
7. The method according to example 1, wherein the offline smart wearable device is a children's smartwatch; and
   the method further comprises:
   interacting offline with a parent's mobile device, so that the parent's mobile device determines one or more NFC devices nearby that are applicable to the children's smartwatch.
8. The method according to example 7, wherein the interacting offline with a parent's mobile device further comprises:
   sharing a location of the children's smartwatch with the parent's mobile device, wherein the parent's mobile device is a smartphone or a tablet computer; and
   receiving a navigation route from the children's smartwatch to the target NFC device and authorization information for the target NFC device that are sent by the parent's mobile device, to perform service interaction with the target NFC device based on the authorization information, wherein
   the target NFC device is selected from the one or more NFC devices, and the navigation route is generated based on the location.
9. The method according to example 8, wherein after the interacting offline with a parent's mobile device, the method further comprises:
   determining that the children's smartwatch arrives near the target NFC device and performs service interaction with the target NFC device;
   acquiring service restriction information set by the parent's mobile device for the target NFC device, wherein the service restriction information comprises service type restriction information and/or service transaction amount restriction information; and
   determining whether the service interaction exceeds a limit corresponding to the service restriction information; and
   if yes, blocking the service interaction.
10. The method according to example 8, wherein after the interacting offline with a parent's mobile device, the method further comprises:
   determining that the children's smartwatch arrives near the target NFC device and performs service interaction with the target NFC device;
   in a process of the service interaction, performing minor transaction evidence collection through one or more predetermined sensors, to generate corresponding evidence collection information that is privacy-protected; and
   reporting the evidence collection information to the parent's mobile device, so that the server obtains the evidence collection information through the children's smartwatch or the parent's mobile device, and associates the evidence collection information with service information corresponding to the service interaction, to respond to a service cancellation request.
11. The method according to any one of examples 1 to 4, wherein the target service comprises a payment service.
12. An NFC service processing method for an offline smart wearable device, applied to a target NFC device, wherein the method comprises:
   after the offline smart wearable device is close to the target NFC device, to read target information from the target NFC device through an NFC card reader in an on state on the offline smart wearable device, receiving user information that is of the offline smart wearable device and that is written back by the offline smart wearable device, wherein the offline smart wearable device enters a specified service application on the offline smart wearable device in response to an NFC service trigger instruction, and automatically switches the NFC card reader from an off state to the on state through the specified service application;
   interacting with a server of the specified service application based on the user information, and executing a corresponding target service; and
   establishing a short-range wireless communication connection with the offline smart wearable device based on the target information, and returning an execution result of the target service to the offline smart wearable device through the short-range wireless communication connection, so that the specified service application obtains the execution result, wherein a maximum communication distance corresponding to the short-range wireless communication connection is greater than an NFC communication distance of the target NFC device.
13. An NFC service processing apparatus for an offline smart wearable device, used in the offline smart wearable device, wherein the apparatus comprises:
   a control module, configured to control an NFC card reader on the offline smart wearable device to be in an off state;
   a receiving module, configured to receive, in the off state, an NFC service trigger instruction for the offline smart wearable device;
   a switching module, configured to enter a specified service application on the offline smart wearable device in response to the NFC service trigger instruction, and automatically switch the NFC card reader from the off state to an on state through the specified service application;
   a reading module, configured to: after the offline smart wearable device is close to a target NFC device, read target information from the target NFC device through the NFC card reader in the on state, and write back user information of the offline smart wearable device to the target NFC device, so that the target NFC device interacts with a server of the specified service application based on the user information, and executes a corresponding target service; and
   a connecting module, configured to: establish a short-range wireless communication connection with the target NFC device based on the target information, and receive, through the short-range wireless communication connection, an execution result that is of the target service and that is returned by the target NFC device, so that the specified service application obtains the execution result, wherein a maximum communication distance corresponding to the short-range wireless communication connection is greater than an NFC communication distance of the target NFC device.
14. The apparatus according to example 13, wherein the switching module displays, after switching the NFC card reader from the off state to the on state, progress change prompt information corresponding to the on state, wherein the progress change prompt information comprises: countdown information and/or detected progress information of the target service; and
   based on the progress change prompt information, if it is determined that corresponding progress is completed, places the specified service application in the background or closes the specified service application, or switches the NFC card reader back to the off state.
15. The apparatus according to example 13, wherein the reading module reads, as the target information, target service information and identification information of the target NFC device from the target NFC device, wherein the target service information is used to be displayed or recorded on the offline smart wearable device; and
   the connecting module automatically performs device pairing based on the identification information of the target NFC device and establishes the short-range wireless communication connection with the target NFC device.
16. The apparatus according to example 13, wherein the connecting module monitors whether the offline smart wearable device is still within an NFC communication distance of the target NFC device; and
   if no, establishes the short-range wireless communication connection with the target NFC device based on the target information, and switches the NFC card reader back to the off state.
17. The apparatus according to any one of examples 13 to 16, wherein the short-range wireless communication connection is a Bluetooth connection.
18. The apparatus according to any one of examples 13 to 16, wherein the offline smart wearable device is a smartwatch.
19. The apparatus according to example 13, wherein the offline smart wearable device is a children's smartwatch; and
   the apparatus further comprises:
   an interaction module, configured to interact offline with a parent's mobile device, so that the parent's mobile device determines one or more NFC devices nearby that are applicable to the children's smartwatch.
20. The apparatus according to example 19, wherein the interaction module shares a location of the children's smartwatch with the parent's mobile device, wherein the parent's mobile device is a smartphone or a tablet computer; and
   receives a navigation route from the children's smartwatch to the target NFC device and authorization information for the target NFC device that are sent by the parent's mobile device, to perform service interaction with the target NFC device based on the authorization information, wherein
   the target NFC device is selected from the one or more NFC devices, and the navigation route is generated based on the location.
21. The apparatus according to example 20, wherein the interaction module determines, after interacting offline with the parent's mobile device, that the children's smartwatch arrives near the target NFC device and performs service interaction with the target NFC device;
   acquires service restriction information set by the parent's mobile device for the target NFC device, wherein the service restriction information comprises service type restriction information and/or service transaction amount restriction information; and
   determines whether the service interaction exceeds a limit corresponding to the service restriction information; and
   if yes, blocks the service interaction.
22. The apparatus according to example 20, wherein the interaction module determines, after interacting offline with the parent's mobile device, that the children's smartwatch arrives near the target NFC device and performs service interaction with the target NFC device;
   in a process of the service interaction, performs minor transaction evidence collection through one or more predetermined sensors, to generate corresponding evidence collection information that is privacy-protected; and
   reports the evidence collection information to the parent's mobile device, so that the server obtains the evidence collection information through the children's smartwatch or the parent's mobile device, and associates the evidence collection information with service information corresponding to the service interaction, to respond to a service cancellation request.
23. An NFC service processing apparatus for an offline smart wearable device, used in a target NFC device, wherein the apparatus comprises:
   a receiving module, configured to: after the offline smart wearable device is close to the target NFC device, to read target information from the target NFC device through an NFC card reader in an on state on the offline smart wearable device, receive user information that is of the offline smart wearable device and that is written back by the offline smart wearable device, wherein the offline smart wearable device enters a specified service application on the offline smart wearable device in response to an NFC service trigger instruction, and automatically switches the NFC card reader from an off state to the on state through the specified service application;
   an execution module, configured to: interact with a server of the specified service application based on the user information, and execute a corresponding target service; and
   a connecting module, configured to: establish a short-range wireless communication connection with the offline smart wearable device based on the target information, and return an execution result of the target service to the offline smart wearable device through the short-range wireless communication connection, so that the specified service application obtains the execution result, wherein a maximum communication distance corresponding to the short-range wireless communication connection is greater than an NFC communication distance of the target NFC device.
24. An NFC service processing device for an offline smart wearable device, used in the offline smart wearable device, wherein the device comprises:
   at least one processor; and
   a memory communicatively connected to the at least one processor, wherein
   the memory stores instructions that can be executed by the at least one processor, and the instructions are executed by the at least one processor, so that the at least one processor can perform the following operations:
      controlling an NFC card reader on the offline smart wearable device to be in an off state;
      receiving, in the off state, an NFC service trigger instruction for the offline smart wearable device;
      entering a specified service application on the offline smart wearable device in response to the NFC service trigger instruction, and automatically switching the NFC card reader from the off state to an on state through the specified service application;
      after the offline smart wearable device is close to a target NFC device, reading target information from the target NFC device through the NFC card reader in the on state, and writing back user information of the offline smart wearable device to the target NFC device, so that the target NFC device interacts with a server of the specified service application based on the user information, and executes a corresponding target service; and
      establishing a short-range wireless communication connection with the target NFC device based on the target information, and receiving, through the short-range wireless communication connection, an execution result that is of the target service and that is returned by the target NFC device, so that the specified service application obtains the execution result, wherein a maximum communication distance corresponding to the short-range wireless communication connection is greater than an NFC communication distance of the target NFC device.
25. An NFC service processing device for an offline smart wearable device, used in a target NFC device, wherein the device comprises:
   at least one processor; and
   a memory communicatively connected to the at least one processor, wherein
   the memory stores instructions that can be executed by the at least one processor, and the instructions are executed by the at least one processor, so that the at least one processor can perform the following operations:
      after the offline smart wearable device is close to the target NFC device, to read target information from the target NFC device through an NFC card reader in an on state on the offline smart wearable device, receiving user information that is of the offline smart wearable device and that is written back by the offline smart wearable device, wherein the offline smart wearable device enters a specified service application on the offline smart wearable device in response to an NFC service trigger instruction, and automatically switches the NFC card reader from an off state to the on state through the specified service application;
      interacting with a server of the specified service application based on the user information, and executing a corresponding target service; and
      establishing a short-range wireless communication connection with the offline smart wearable device based on the target information, and returning an execution result of the target service to the offline smart wearable device through the short-range wireless communication connection, so that the specified service application obtains the execution result, wherein a maximum communication distance corresponding to the short-range wireless communication connection is greater than an NFC communication distance of the target NFC device.

## Claims

1. An NFC service processing method for an offline smart wearable device, the method performed by the offline smart wearable device, wherein the method comprises:
controlling an NFC card reader on the offline smart wearable device to be in an off state;
receiving, in the off state, an NFC service trigger instruction for the offline smart wearable device;
entering a specified service application on the offline smart wearable device in response to the NFC service trigger instruction, and automatically switching the NFC card reader from the off state to an on state through the specified service application;
after the offline smart wearable device is close to a target NFC device, reading target information from the target NFC device through the NFC card reader in the on state, and writing back user information of the offline smart wearable device to the target NFC device, so that the target NFC device interacts with a server of the specified service application based on the user information, and executes a corresponding target service; and
establishing a short-range wireless communication connection with the target NFC device based on the target information, and receiving, through the short-range wireless communication connection, an execution result that is of the target service and that is returned by the target NFC device, so that the specified service application obtains the execution result, wherein a maximum communication distance corresponding to the short-range wireless communication connection is greater than an NFC communication distance of the target NFC device.

2. The method according to claim 1, wherein after the switching the NFC card reader from the off state to an on state, the method further comprises:
displaying progress change prompt information corresponding to the on state, wherein the progress change prompt information comprises: countdown information and/or detected progress information of the target service; and
based on the progress change prompt information, if it is determined that corresponding progress is completed, placing the specified service application in the background or closing the specified service application, or switching the NFC card reader back to the off state.

3. The method according to any one of claims 1 or 2, wherein the reading target information from the target NFC device specifically comprises:
reading, as the target information, target service information and identification information of the target NFC device from the target NFC device, wherein the target service information is used to be displayed or recorded on the offline smart wearable device; and
the establishing a short-range wireless communication connection with the target NFC device based on the target information specifically comprises:
automatically performing device pairing based on the identification information of the target NFC device and establishing the short-range wireless communication connection with the target NFC device.

4. The method according to any one of claims 1 to 3, wherein the establishing a short-range wireless communication connection with the target NFC device based on the target information specifically comprises:
monitoring whether the offline smart wearable device is still within an NFC communication distance of the target NFC device; and
if no, establishing the short-range wireless communication connection with the target NFC device based on the target information, and switching the NFC card reader back to the off state.

5. The method according to any one of claims 1 to 4, wherein the short-range wireless communication connection is a Bluetooth connection; and/or
wherein the offline smart wearable device is a smartwatch.

6. The method according to any one of claims 1 to 5, wherein the offline smart wearable device is a children's smartwatch; and
the method further comprises:
interacting offline with a parent's mobile device, so that the parent's mobile device determines one or more NFC devices nearby that are applicable to the children's smartwatch.

7. The method according to claim 6, wherein the interacting offline with a parent's mobile device further comprises:
sharing a location of the children's smartwatch with the parent's mobile device, wherein the parent's mobile device is a smartphone or a tablet computer; and
receiving a navigation route from the children's smartwatch to the target NFC device and authorization information for the target NFC device that are sent by the parent's mobile device, to perform service interaction with the target NFC device based on the authorization information, wherein
the target NFC device is selected from the one or more NFC devices, and the navigation route is generated based on the location.

8. The method according to claim 7, wherein after the interacting offline with a parent's mobile device, the method further comprises:
determining that the children's smartwatch arrives near the target NFC device and performs service interaction with the target NFC device;
acquiring service restriction information set by the parent's mobile device for the target NFC device, wherein the service restriction information comprises service type restriction information and/or service transaction amount restriction information; and
determining whether the service interaction exceeds a limit corresponding to the service restriction information; and
if yes, blocking the service interaction.

9. The method according to claim 7, wherein after the interacting offline with a parent's mobile device, the method further comprises:
determining that the children's smartwatch arrives near the target NFC device and performs service interaction with the target NFC device;
in a process of the service interaction, performing minor transaction evidence collection through one or more predetermined sensors, to generate corresponding evidence collection information that is privacy-protected; and
reporting the evidence collection information to the parent's mobile device, so that the server obtains the evidence collection information through the children's smartwatch or the parent's mobile device, and associates the evidence collection information with service information corresponding to the service interaction, to respond to a service cancellation request.

10. The method according to any one of claims 1 to 9, wherein the target service comprises a payment service.

11. An NFC service processing method for an offline smart wearable device, the method performed by a target NFC device, wherein the method comprises:
after the offline smart wearable device is close to the target NFC device, to read target information from the target NFC device through an NFC card reader in an on state on the offline smart wearable device, receiving user information that is of the offline smart wearable device and that is written back by the offline smart wearable device, wherein the offline smart wearable device enters a specified service application on the offline smart wearable device in response to an NFC service trigger instruction, and automatically switches the NFC card reader from an off state to the on state through the specified service application;
interacting with a server of the specified service application based on the user information, and executing a corresponding target service; and
establishing a short-range wireless communication connection with the offline smart wearable device based on the target information, and returning an execution result of the target service to the offline smart wearable device through the short-range wireless communication connection, so that the specified service application obtains the execution result, wherein a maximum communication distance corresponding to the short-range wireless communication connection is greater than an NFC communication distance of the target NFC device.

12. An NFC service processing apparatus for an offline smart wearable device, used in the offline smart wearable device, wherein the apparatus is configured to perform the method of any one of claims 1 to 10.

13. An NFC service processing apparatus for an offline smart wearable device, used in a target NFC device, wherein the apparatus is configured to perform the method of claim 11.

14. An NFC service processing device for an offline smart wearable device, used in the offline smart wearable device, wherein the device comprises:
at least one processor; and
a memory communicatively connected to the at least one processor, wherein
the memory stores instructions that can be executed by the at least one processor, and the instructions are executed by the at least one processor, so that the at least one processor can perform the following operations:
controlling an NFC card reader on the offline smart wearable device to be in an off state;
receiving, in the off state, an NFC service trigger instruction for the offline smart wearable device;
entering a specified service application on the offline smart wearable device in response to the NFC service trigger instruction, and automatically switching the NFC card reader from the off state to an on state through the specified service application;
after the offline smart wearable device is close to a target NFC device, reading target information from the target NFC device through the NFC card reader in the on state, and writing back user information of the offline smart wearable device to the target NFC device, so that the target NFC device interacts with a server of the specified service application based on the user information, and executes a corresponding target service; and
establishing a short-range wireless communication connection with the target NFC device based on the target information, and receiving, through the short-range wireless communication connection, an execution result that is of the target service and that is returned by the target NFC device, so that the specified service application obtains the execution result, wherein a maximum communication distance corresponding to the short-range wireless communication connection is greater than an NFC communication distance of the target NFC device.

15. An NFC service processing device for an offline smart wearable device, used in a target NFC device, wherein the device comprises:
at least one processor; and
a memory communicatively connected to the at least one processor, wherein
the memory stores instructions that can be executed by the at least one processor, and the instructions are executed by the at least one processor, so that the at least one processor can perform the following operations:
after the offline smart wearable device is close to the target NFC device, to read target information from the target NFC device through an NFC card reader in an on state on the offline smart wearable device, receiving user information that is of the offline smart wearable device and that is written back by the offline smart wearable device, wherein the offline smart wearable device enters a specified service application on the offline smart wearable device in response to an NFC service trigger instruction, and automatically switches the NFC card reader from an off state to the on state through the specified service application;
interacting with a server of the specified service application based on the user information, and executing a corresponding target service; and
establishing a short-range wireless communication connection with the offline smart wearable device based on the target information, and returning an execution result of the target service to the offline smart wearable device through the short-range wireless communication connection, so that the specified service application obtains the execution result, wherein a maximum communication distance corresponding to the short-range wireless communication connection is greater than an NFC communication distance of the target NFC device.
